# EUROPEAN PATENT APPLICATION

(11) **EP 3 109 297 A1**
(43) Date of publication of application: **28.12.2016**
(21) Application number: 15173922.4
(22) Date of filing: 25.06.2015
(51) Int. Cl.: C10L 1/02, C10L 1/06, C10L 1/08

(54) **FUEL FORMULATIONS**

(71) Applicant: Shell Internationale Research Maatschappij B.V., 2596 HR Den Haag (NL)
(72) Inventor: PRICE, Richard John, Chester CH3 5JA (GB)
(74) Representative: Matthezing, Robert Maarten

(57) **Abstract**

A fuel formulation for an internal combustion engine, the formulation comprising, in combination with a cetane or octane enhancing component: a bio-derived C₆ iso-alkane component (i); and/or a bio-derived C₅ alkane component (ii).

## Description

### Field of the Invention

This invention relates to bio-derived fuel formulations. In particular, though not exclusively, this invention relates to bio-derived fuel formulations and compositions for powering internal combustion engines, uses of the formulations and compositions, and related blending methods.

### Background to the Invention

The Intergovernmental Panel on Climate Change (IPCC) has assessed the scientific evidence for human-induced climate change - see Climate Change 2013: The Physical Science Basis, IPCC Working Group I Contributions to AR5, September 2013*.* These findings affirm that global warming is occurring as a consequence of increased radiative forcing due to higher atmospheric concentrations of greenhouse gases produced by human activity. The largest driver of this warming is carbon dioxide (CO₂) emission from fossil fuel combustion. The rise in the Earth's average temperature is therefore linked to the total amount of CO₂ that has been released into the atmosphere. It has been accepted by the international community that the magnitude of this temperature rise should be limited to less than 2 °C to avoid severe climate related impact on people and economies.

CO₂ emission levels from human sources can be expressed as the product of four inputs: the size of the human population, gross domestic product per capita, primary energy consumption per unit of GDP, and the carbon intensity of energy use. With the world's population projected to rise to over 9 billion by 2050 and energy consumption expected to increase in the region of 40-50% by 2030, there appears to be no scope to reduce CO₂ emissions via the first three of these inputs. There is hence an increasing need for low to zero CO₂ technologies for energy production.

A variety of initiatives are underway to develop energy pathways that allow the deep decarbonisation required to limit climate change to less than 2 °C. A number of common themes may be identified, including low-carbon electricity and fuel switching from carbon-intensive fossil fuels to lower-carbon fuels. As part of this, road transportation may need to become a zero CO₂ emitter by the end of the century, with the first 80% of this reduction being achieved by 2050.

Bio-derived fuels or fuel components are one technology which has been explored to reduce CO₂ emission levels in road transportation. Bio-derived fuels or fuel components contain at least some renewable carbon compounds. Preferably, they may consist essentially of such compounds. Biomass feedstocks available for conversion into biofuel may be either food based (for example, sugar, starch and vegetable oils) or non-food based (for example, cellulose, hemicellulose, lignin or algal lipids). The detection of carbon 14 may be used to identify bio-derived materials, for example by measuring decay of carbon 14 (e.g. in disintegrations per minute per gram carbon - dpm/gC) through liquid scintillation counting. A bio-derived fuel, component or other material may therefore be defined as a material comprising at least about 0.1 dpm/gC of carbon 14. Other carbon signatures may also be used to identify bio-derived materials, as is known in the art.

Existing approaches for providing biofuels are often predominantly food-based, or require complex blending of a large number of components to achieve acceptable fuel properties.

It is an object of the invention to address at least one of the above problems, or another problem associated with the prior art.

### Statements of the Invention

One aspect of the invention provides, a fuel formulation for an internal combustion engine, the fuel formulation comprising, in combination with a cetane or octane enhancing component: a bio-derived C₆ iso-alkane component (i); and/or a bio-derived C₅ alkane component (ii).

For the avoidance of doubt, the notation "Cₙ" is used herein to indicate the number of carbon atoms in a molecule, e.g. six and five carbon atoms respectively in C₆ and C₅ alkanes.

C₆ iso-alkane and C₅ alkane compounds can be bio-derived from non-food sources. Hemicellulose and cellulose, which make up circa 75% of plant biomass, consist of frameworks of five and six carbon atoms. There is hence a ready supply of non-food biomass feedstock from which bio-derived C₅ and C₆ alkanes may be obtained by removal of oxygen.

Processes for producing C₆ and C₅ alkane compounds (hexane and pentane) from hemicellulose and cellulose are known in the art. For example, one-pot conversion of cellulose into hexane has been shown with a yield of up to 83% (S. Liu, M. Tamura, Y. Nakagawa and K. Tomishige, One-Pot Conversion of Cellulose into n-Hexane over the Ir-ReOx/SiO2 Catalyst, Combined with HZSM-5, ACS Sustainable Chem. Eng., 2014, 2(7), pp 1819-1827*).* For pentane one approach is set out in J. Lange, R. Price, P. Ayoub, J. Louis, L. Petrus, L. Clarke and H. Gosselink, Valeric Biofuels: A Platform of Cellulosic Transportation Fuels, Angew. Chem. Int . Ed. , 2010, 49, 4479-4483*.*

Bio-derived normal (n-)alkanes, e.g. n-hexane and n-pentane obtained by the above techniques, may be isomerised using standard techniques known in the art. Isomerisation of n-alkanes increases branching in the alkanes, creating iso-alkanes, i.e. branched alkanes.

The fuel formulation comprises a C₆ iso-alkane component (i) which comprises one or more C₆ iso-alkanes. C₆ iso-alkanes, namely 2-methylpentane, 3-methylpentane 2,3-dimethylbutane, and 2,2-dimethylbutane, are preferable to C₆ n-alkane, i.e. n-hexane, which may undergo bio-transformation to 2,5-hexanedione, a neurotoxin.

In principle, the C₆ iso-alkane component may consist, or consist essentially of one or more C₆ iso-alkanes. The C₆ iso-alkane component may in particular be a product stream from an isomerisation process. The thermodynamics of an isomerisation process may lead to a C₆ iso-alkane component consisting essentially of a mixture of C₆ iso-alkanes.

However, in practice, the C₆ iso-alkane component may also comprise other C₆ alkane compounds, or indeed some other hydrocarbon compounds, e.g. as may result or remain after a biosynthesis and isomerisation process.

Suitably, the C₆ iso-alkane component (i) may comprise at least 60% v/v, based on the total component, of C₆ iso-alkanes, in particular at least 80% v/v C₆ iso-alkanes, preferably at least 90% v/v C₆ iso-alkanes, such as at least 94% v/v C₆ iso-alkanes, or even at least 97% v/v, at least 99% v/v or at least 99.5% v/v C₆ iso-alkanes.

The C₆ iso-alkane component (i) may optionally comprise an amount of n-hexane. Suitably, the amount of n-hexane in the C₆ iso-alkane component (i) may be at most 20 % v/v, preferably at most 10% v/v, such as at most 5% v/v, or even at most 3% v/v. The amount of n-hexane in the C₆ iso-alkane component (i), if present, may, for example, be at least 0.5 % v/v, at least 1% v/v or at least 2% v/v.

The C₆ iso-alkane component (i) may optionally comprise hydrocarbon compounds other than C₆ alkanes. Suitably, the amount of such other hydrocarbon compounds in the C₆ iso-alkane component (i) may be at most 20 % v/v, preferably at most 10% v/v, such as at most 5% v/v, or even at most 3% v/v. The amount of such other hydrocarbon compounds in the C₆ iso-alkane component (i), if present, may, for example, be at least 0.5 % v/v, at least 1% v/v or at least 2% v/v. As aforesaid, the other hydrocarbon compounds may typically be conversion by-products.

Suitably, the C₆ iso-alkane component (i) may have a RON in the range of from 64 to 86 and/or a MON in the range of from 62 to 80.

In an embodiment the C₆ iso-alkane component comprises 3-methylpentane (RON 75 MON 74) in an amount in the range of from 20 to 35% v/v, 2-methylpentane (RON 73, MON 74) in an amount in the range of from 40 to 60% v/v, 2,3-dimethylbutane (RON 102, MON 101) in an amount in the range of from 5 to 15 %v/v, 2,2-dimethylbuatne (RON 94, MON 93) in an amount in the range of from 5 to 15 %v/v and optionally a balance of n-hexane.

In an embodiment the C₆ iso-alkane component comprises 3-methylpentane (RON 75 MON 74) in an amount of about 28% v/v, 2-methylpentane (RON 73, MON 74) in an amount of about 50 % v/v, 2,3-dimethylbutane (RON 102, MON 101) in an amount of about 10 %v/v, 2,2-dimethylbuatne (RON 94, MON 93) in an amount of about 10 %v/v and optionally a balance of n-hexane.

The C₅ alkane component (ii) may be a normal or iso component, e.g. depending on the desired application, as will be described.

It has been found that component (i) and/or component (ii) can be combined with a cetane or octane enhancing component to provide viable biofuel formulations. Advantageously, components (i) and (ii) may together make up at least 50% v/v, or even at least 70% v/v based on the total volume of the formulation, thereby providing a predominantly non-food based biofuel formulation. To maximise the range of biomass feedstocks from which the formulation can be readily derived, and to facilitate tailoring of volatility, the fuel formulation may advantageously comprise both component (i) and component (ii). Suitably, the fuel formulation may comprise at least 10% v/v of component (i) and at least 10% v/v of component (ii) based on the total volume of the formulation, or even at least 20% v/v or at least 30% v/v of component (i) and/or (ii).

The relative amounts and specific nature of the components of the formulation may be chosen consistent with desired fuel formulation properties.

It is advantageous for the fuel formulation to have a volatility sufficiently tuned for all climates and seasonal conditions. Volatility is measured according to the Reid method for determining the vapour pressure of petroleum products (ASTM D323). Reid Vapour Pressure (RVP) is defined as the absolute vapour pressure exerted by a liquid at 100 °F (37.8 °C).

Suitably, the fuel formulation may have a volatility (RVP) in the range from 45 to 115 kPa, or more preferably in the range of from 60 to 105 kPa.

Suitably the volatility of the fuel formulation may be at least 60 kPa, or at least 70 kPa, or at least 80 kPa, or at least 90 kPa, or even at least 105 kPa.

Suitably the volatility of the fuel formulation may be at most 105 kPa, or at most 90 kPa, or at most 80 kPa, or at most 70 kPa, or even at most 60 kPa.

In some embodiments of the invention, the fuel formulation is suitable for powering a spark ignition engine (i.e. is a "SI formulation").

It is advantageous for a SI formulation to have a Research Octane Number (RON) (ASTM D2699) and/or Motor Octane Number (MON) (ASTM D2700) rating sufficiently high to prevent undesirable knocking. The present application provides fuel formulations having a RON of 95 or more. The present application provides fuel formulations having a RON greater than 95. Such formulations are suitable for use in a SI engine.

The RON of such a SI formulation is suitably 80 or greater. It may be 85 or 90 or 93 or 94 or 95 or 98 or greater. The RON may for example be from 80 to 110 or from 85 to 115 or from 90 to 105 or from 93 to 102 or from 94 to 100.

Suitably, the SI formulation may have a volatility (RVP) in the range of from 45 to 115 kPa, in particular 60 to 105 kPa, for example in the range of from 70 to 100 kPa, in particular 75 to 95 kPa.

Gravimetric energy density can be determined according to the standard test method for heat of combustion of liquid hydrocarbon fuels by bomb calorimetry (ASTM D4809-13). It is advantageous for a SI formulation to have a gravimetric energy density in the range from 30 to 50 MJ/kg, or more preferably in the range of from 35 to 45 MJ/kg, such as in the range from 38 to 40 MJ/kg.

In the context of providing a SI formulation, the cetane or octane enhancing component of the fuel formulation may suitably be an octane enhancing component, in particular an octane enhancing oxygenate. Advantageously, to enhance the bio-derived proportion of the fuel formulation, the octane enhancing component may be bio-derived. Known examples of octane enhancing oxygenates include alcohols and ethers.

In an embodiment, the octane enhancing component is an alcohol component comprising, consisting essentially of, or consisting of one or more alcohols, preferably bio-derived. Suitably, the alcohol component may comprise at least 90% v/v, or even at least 95% v/v or at least 99% v/v, or at least 99.5% v/v alcohol.

The alcohol(s) may for example be selected from C₂ to C₄ saturated or unsaturated alcohols and mixtures thereof. Alcohols may in particular be selected from C₂ to C₄ aliphatic alcohols such as ethanol, propanol and butanol, and mixtures thereof. In an embodiment, the alcohol component comprises, consists essentially of, or consists of ethanol.

Small amounts of impurities may optionally be present in the octane enhancing, in particular alcohol component. Suitably the amount of impurities, if present, may be at most 10% v/v of the component, or at most 5% v/v, or at most 1%, or at most 0.5% v/v. Impurities may, for example, be those resulting from a biomass-based production process.

For particular blending synergy with components (i) and (ii) of the formulation, the octane enhancing component may advantageously comprise or consist of alcohol component, in particular ethanol. Routes for obtaining bio-derived ethanol are well known in the art. For example, sugar fermentation is a well-established process used for the production of ethanol.

The amount of octane enhancing component, in particular alcohol component or ethanol, in the formulation may advantageously be at least 10% v/v, in particular at least 15 % v/v, or at least 18% v/v, or even at least 20% v/v, based on the total volume of the formulation.

Optionally, particularly since the octane enhancing component may be a food based component, the amount of octane enhancing component, in particular alcohol component or ethanol, in the formulation may be at most 40% v/v, in particular at most 30% v/v, or at most 28% v/v, or even at most 20% v/v, based on the total volume of the formulation.

In the context of providing a SI formulation, the bio-derived C₅ alkane component (ii) may advantageously be a C₅ iso-alkane component comprising one or more C₅ iso-alkanes. C₅ iso-alkanes, namely 2-methylbutane and 2,2-dimethylpropane, offer a higher octane number than C₅ n-alkane (n-pentane). As aforesaid, such iso-alkanes may be obtained by isomerising C₅ n-alkane using standard techniques.

In principle, the C₅ iso-alkane component may consist, or consist essentially of, one or more C₅ iso-alkanes. The C₅ iso-alkane component may in particular be a product stream from an isomerisation process. The thermodynamics of isomerisation processes may lead to a C₅ iso-alkane component consisting, or consisting essentially of 2-methylbutane.

However, the C₅ iso-alkane component may also comprise other C₅ alkane compounds, or indeed other hydrocarbon compounds, e.g. as may result or remain after a biosynthesis and isomerisation process.

Suitably, a C₅ iso-alkane component (ii) may comprise at least 50% v/v, based on the total component, of C₅ iso-alkanes, in particular at least 60% v/v C₅ iso-alkanes, preferably at least 70% v/v C₅ iso-alkanes, such as at least 80% v/v C₅ iso-alkanes, or even at least 90% v/v, at least 95% v/v or at least 99% v/v C₅ iso-alkanes.

The C₅ iso-alkane component (ii) may optionally comprise an amount of n-pentane. Suitably, the amount of n-pentane in the C₅ iso-alkane component (ii) may be at most 30 % v/v, preferably at most 25% v/v, such as at most 20% v/v, or even at most 10% v/v. The amount of n-pentane in the C₅ iso-alkane component (ii), if present, may, for example, be at least 0.5 % v/v, at least 5% v/v or at least 15% v/v.

The C₅ iso-alkane component (ii) may optionally comprise hydrocarbon compounds other than C₅ alkanes. Suitably, the amount of such other hydrocarbon compounds in the C₅ iso-alkane component (ii) may be at most 20 % v/v, preferably at most 15% v/v, such as at most 5% v/v, or even at most 3% v/v. The amount of such other hydrocarbon compounds in the C₅ iso-alkane component (ii), if present, may, for example, be at least 0.5 % v/v, at least 1% v/v or at least 2% v/v. As aforesaid, the other hydrocarbon compounds may typically be conversion by-products.

Suitably, the C₅ iso-alkane component (i) may have a RON in the range of from 75 to 92 and/or a MON in the range of from 78 to 90.

In the context of providing a SI formulation, the amount of components (i) and/or (ii) may be chosen consistent with achieving a desired volatility and/or octane number.

In some embodiments of the invention, particularly to help provide an octane number of at least 94, the formulation comprises at most 70% v/v, based on the total volume of the formulation, of component (i). Suitably, the amount of component (i) in the formulation may be at most 60% v/v, at most 50% v/v, at most 40% v/v or even at most 30% v/v, based on the total volume of the formulation.

Optionally, the amount of component (i) in the formulation may be at least 5% v/v, at least 10% v/v, or even at least 20% v/v or at least 50% v/v, based on the total volume of the formulation.

In some embodiments of the invention, particularly to help provide an octane number of at least 94, the formulation comprises at most 85% v/v of component (ii), based on the total volume of the formulation. Suitably, the amount of component (ii) in the formulation may be at most 70% v/v, at most 60% v/v, at most 50% v/v or even at most 30% v/v, based on the total volume of the formulation.

Optionally, the amount of component (ii) in the formulation may be at least 5% v/v, at least 10% v/v, or even at least 20% v/v or at least 50% v/v, based on the total volume of the formulation.

In one embodiment, the formulation comprises in the range of from 15 to 30% v/v alcohol component, in particular ethanol, based on the total volume of the formulation; and both component (i) and component (ii) such that the formulation has a research octane number of at least 94 and a Reid vapour pressure in the range of from 45 to 115 kPa, e.g. 60 to 105 kPa.

In some embodiments of the invention, the fuel formulation is suitable for powering a compression ignition engine (i.e. is a "CI formulation").

It is advantageous for a CI formulation to have a Cetane Number (CN) rating that is sufficiently high. If the CN number of the fuel formulation is too low, a compression ignition (diesel) engine can be more difficult to start and may run more noisily when cold. CN is measured according to ASTM D613-14.

The present application provides fuel formulations having a CN of 40 or more. The present application provides fuel formulations having a CN greater than 40.

The CN of such a formulation is suitably 34 or greater. It may be 36 or 37 or 38 or 39 or 40 or 41 or greater. The CN may for example be from 34 to 46 or from 36 to 48 or from 37 to 44 or from 38 to 43 or from 39 to 40.

It is advantageous for a CI formulation to have a gravimetric energy density in the range from 30 to 50 MJ/kg, or more preferably in the range of from 40 to 50 MJ/kg, such as in the range from 43 to 44 MJ/kg, as measured according to ASTM D4809-13.

Suitably, the CI formulation may have a volatility (RVP) in the range of from 45 to 115 kPa, in particular in the range of from 60 to 105 kPa, for example in the range of from 70 to 100 kPa, in particular 75 to 95 kPa. Such a vapour pressure is unusual for a CN formulation. The high volatility CI formulation proposed in this embodiment works by producing vapour mixtures during storage that are sufficiently rich to be above their upper flammability limit, in a similar manner to gasoline. This is contrary to the conventional approach for CI fuels, which normally have a lower volatility.

In the context of providing a CI formulation, the cetane or octane enhancing component of the fuel formulation may suitably be a cetane enhancing component, in particular a cetane enhancing oxygenate.

Advantageously, to enhance the bio-derived proportion of the fuel formulation, the cetane enhancing component may be bio-derived. Known examples of cetane enhancing oxygenates include ethers and esters.

In an embodiment, the cetane enhancing component is an ether component comprising or consisting essentially or consisting of one or more ethers, preferably bio-derived. Suitably, the ether component may comprise at least 90% v/v, or even at least 95% v/v or at least 99% v/v, or at least 99.5% v/v ether. The ether(s) may for example be selected from C₂ to C₈ saturated or unsaturated ethers and mixtures thereof. Ether(s) may in particular be selected from C₂ to C₈ aliphatic ethers such as diethyl ether (C₄), dipropyl ethers (C₆) and dibutyl ethers (C₈), and mixtures thereof. In an embodiment, the ether component comprises, consists essentially of, or consists of diethyl ether.

Small amounts of impurities may optionally be present in the ether component. Suitably the amount of impurities, if present, may be at most 10% v/v, or at most 5% v/v, or at most 1%, or at most 0.5% v/v. The nature of the impurities may, for example, be those resulting from a biomass-based production process.

For particular blending synergy with components (i) and (ii) of the formulation, the cetane enhancing component may advantageously comprise or consist of ether component, in particular diethyl ether. As aforesaid, routes for obtaining bio-derived ethanol are well known in the art. The acid catalysed condensation of ethanol produces diethyl ether, as discussed for example in EP0407038 (A1).

The amount of cetane enhancing component, in particular ether component or diethyl ether, in the formulation may advantageously be at least 5% v/v, in particular at least 6 % v/v, or at least 8% v/v, or even at least 10% v/v, based on the total volume of the formulation.

Optionally, particularly since the cetane enhancing component may be food based, the amount of cetane enhancing component, in particular ether component or diethyl ether, in the formulation may be at most 40% v/v, in particular at most 30% v/v, or at most 28% v/v, or even at most 20% v/v, based on the total volume of the formulation.

In the context of providing a CI formulation, the bio-derived C₅ alkane component (ii) may advantageously be a C₅ n-alkane component comprising C₅ n-alkane. C₅ n-alkane, i.e. n-pentane, offers a higher cetane number than C₅ iso-alkanes. In principle, the C₅ n-alkane component may consist, or consist essentially of, C₅ n-alkane. However, in practice, the C₅ n-alkane component may also comprise other C₅ alkane compounds, or indeed other hydrocarbon compounds, e.g. as may result or remain after a biosynthesis process.

Suitably, a C₅ n-alkane component (ii) may comprise at least 80% v/v, based on the total component, of C₅ n-alkane, in particular at least 90% v/v C₅ n-alkane, preferably at least 94% v/v C₅ n-alkane, such as at least 97% v/v C₅ n-alkane, or even at least 98% v/v, at least 99% v/v, or at least 99.5% v/v C₅ n-alkane.

The C₅ n-alkane component (ii) may optionally comprise an amount of C₅ iso-alkane. Suitably, the amount of C₅ iso-alkane in the C₅ n-alkane component (ii) may be at most 10% v/v, preferably at most 5% v/v, such as at most 3% v/v, or even at most 1% v/v. The amount of C₅ iso-alkane in the C₅ n-alkane component (ii), if present, may, for example, be at least 0.5 % v/v, at least 1% v/v or at least 5% v/v.

The C₅ n-alkane component (ii) may optionally comprise hydrocarbon compounds other than C₅ alkanes. Suitably, the amount of such other hydrocarbon compounds in the C₅ n-alkane component (ii) may be at most 10% v/v, preferably at most 5% v/v, such as at most 3% v/v, or even at most 1% v/v. The amount of such other hydrocarbon compounds in the C₅ n-alkane component (ii), if present, may, for example, be at least 0.5 % v/v, at least 1% v/v or at least 2% v/v. As aforesaid, the other hydrocarbon compounds may typically be conversion by-products.

Suitably, the C₅ n-alkane component (ii) may have a RON in the range of from 55 to 61 and/or a MON in the range of from 55 to 61.

In the context of providing a CI formulation, the amount of components (i) and/or (ii) may be chosen consistent with achieving a desired volatility and/or cetane number.

In some embodiments of the invention, particularly to help provide a cetane number of at least 39, the formulation comprises at most 86% v/v of component (i), based on the total volume of the formulation. Optionally, the amount of component (i) in the formulation may be at most 60% v/v, at most 50% v/v, at most 40% v/v or even at most 30%v/v, based on the total volume of the formulation.

In some embodiments of the invention, particularly to help provide a cetane number of at least 39, the formulation comprises at most 92% v/v of component (ii), based on the total volume of the formulation. Suitably, the amount of component (ii) in the formulation may be at most 60% v/v, at most 50% v/v, at most 40% v/v or even at most 30% v/v, based on the total volume of the formulation. Optionally, the amount of component (ii) in the formulation may be at least 5% v/v, at least 10% v/v, or even at least 20% v/v or at least 50% v/v, based on the total volume of the formulation.

In one embodiment, the formulation comprises in the range of from 8 to 15% v/v diethyl ether, based on the total volume of the formulation; and both component (i) and component (ii) such that the formulation has a cetane number of at least 39 and a Reid vapour pressure in the range of from 45 to 115 kPa, e.g. 60 to 105 kPa.

The present invention makes use of product derived from biological sources. Advantageously, the fuel formulation may be at least 50% w/w bio-derived, or even at least 70% w/w bio-derived, or even at least 95% w/w bio-derived, based on the total weight of carbon in the formulation. Indeed, because all essential components of the formulation may be derived from biological sources, the overall fuel formulation may be completely bio-derived, or at least substantially completely bio-derived.

A fuel formulation according to the invention may contain one or more fuel additives which are suitable for use in bio-derived or conventional fuels. Many such additives are known and commercially available. They may be added to the fuel formulation at any point during its preparation. Non-limiting examples of suitable types of fuel additives that can be included include antioxidants, corrosion inhibitors, detergents, dehazers, demulsifiers, stability enhancers, antiknock additives, metal deactivators, valve seat recession protectant compounds, dyes, solvents, carrier fluids, diluents, friction modifiers, markers, and combinations thereof. More than one additive or chemical can be used. Examples of suitable additives are also described in US-A-5,855,629.

The fuel formulation may consist of the cetane or octane enhancing component, component (i), and/or component (ii), optionally in combination with one or more fuel additives, e.g. in an amount up to 1% v/v, based on the total volume of the formulation.

It is possible, in accordance with the invention, to combine just three components in such a manner that the resultant combinations can provide liquid fuel formulations that can meet the requirements for either spark ignition (petrol) engines or compression ignition (diesel) engines.

Advantageously, components (i) and/or (ii) may be essentially the sole hydrocarbon component(s) in the formulation. Component (i) may be the sole C₆ alkane component in the formulation. Component (ii) may be the sole C₅ alkane component in the formulation.

Advantageously, the said cetane or octane enhancing component may be the sole cetane or octane enhancing component (as defined anywhere herein) in the formulation.

The fuel formulation may be further blended. According to a further aspect of the invention, there is provided a fuel composition comprising a fuel formulation according to any aspect or embodiment of the invention, together with one or more other fuel ingredients.

The other fuel ingredients may be, for example, additional fuel components as described anywhere hereinabove. Other fuel suitable fuel components are known in the art, such as for example base fuels (fossil fuel and/or bio-derived), additives or oxygenates.

The make-up of such a composition may conveniently be chosen so as to achieve desired properties for the overall fuel composition. Suitable ingredients and concentration ratios will depend in part on the natures of the ingredient(s), and in part on the specification(s) with which the fuel composition is desired to comply.

Suitable concentrations for the ingredients of the fuel composition may therefore be chosen so as to achieve one or more desired properties for the composition as a whole, for example a minimum desired RON or cetane value and/or a RVP below a target maximum, and/or an aromatics content below a target maximum, and/or a minimum/maximum desired volatility specification (E70 or E100) value. Target values for the composition may be, for example, as hereinabove defined in respect of the fuel formulation.

The other fuel ingredients may be bio-derived and/or fossil fuel derived. In an embodiment, the fuel composition is at least at least 50% v/v bio-derived, or even at least 70% v/v bio-derived, or even at least 95% v/v bio-derived, based on the total volume of the composition.

It is advantageous to have a low aromatic hydrocarbon and benzene content. Without wishing to be bound to any theory, this leads to reduced combustion chamber deposits as well as a reduction in NOₓ, HC, and benzene emissions. The fuel composition may suitably contain up to 40% v/v of aromatic hydrocarbons, or up to 35% v/v, for example from 30 to 35% v/v, based on the total volume of the composition. It suitably has a benzene content of 2% v/v or less, or of 1% v/v or less, based on the total volume of the composition.

Suitably, the fuel composition may contain up to 15% v/v of unsaturated (olefinic) hydrocarbons, or up to 10% v/v, for example from 5 to 10% v/v, based on the total volume of the composition.

Suitably, the fuel composition may contain up to 15 ppm of sulphur, or up to 10 ppm, for example from 5 to 10 ppm, based on the total composition.

A fuel composition suitably has a low total lead content, such as at most 0.005 g/l. In an embodiment it is lead free ("unleaded"), i.e. it has no lead or lead compounds in it.

Suitably, the fuel composition or formulation may constitute an automotive fuel meeting one or more standards for automotive fuels.

According to another aspect of the invention, there is provided the use a fuel formulation or composition according to any aspect or embodiment of the invention to power an internal combustion engine. In an embodiment, a formulation that is a SI formulation is used to power a spark ignition engine. In an embodiment, a formulation that is a CI fuel is used to power a compression ignition engine.

Advantageously, the use may be for the purpose of reducing CO₂ emissions. Emissions may be reduced, for example, relative to powering the engine with a pure fossil fuel, or a fuel with a lower bio-derived content.

Suitably, the internal combustion engine may be an engine of an automobile. In an embodiment, the automobile is a hybrid vehicle. Hybrid vehicles are now being produced by most of the major automobile manufacturers and combine an internal combustion engine with an electric motor. The plug-in hybrid electric vehicle (PHEV) is one configuration of this technology: a lithium ion battery allows the vehicle to be driven in all electric-mode over a distance determined by the size of the battery (e.g. ca. 80 km). At the end of the journey the vehicle may be re-charged with mains electricity. The internal combustion engine, which runs on a liquid fuel, allows longer journeys (out to ca. 500 km) to be made.

Use of the fuel formulation or composition in a hybrid vehicle may provide a synergistic decarbonisation approach for road transport with low carbon electricity. In particular, it could provide a solution allowing road transportation to become a zero CO₂ emitter by the end of the century, with the first 80% of this reduction being achieved by 2050. This solution could be achieved without excessive use of food-based biofuels, or indeed of biofuels in general.

According to yet another aspect of the invention, there is provided a method of blending a fuel formulation or composition comprising components, and optionally ingredients, as defined in any aspect or embodiment of the invention, the method comprising blending the components, and optionally the ingredients, to form the formulation or composition.

Suitably, the formulation or composition may be blended for the purpose of reducing CO₂ emissions, in particular, for providing a composition comprising bio-derived carbon for powering a combustion engine, in particular in an automobile.

According to yet another aspect of the invention, there is provided the use of a fuel formulation according to any aspect or embodiment of the invention in a fuel composition for the purpose of increasing the bio-derived content of the fuel composition.

Throughout the description and claims of this specification, the words "comprise" and "contain" and variations of the words, for example "comprising" and "comprises", mean "including but not limited to", and do not exclude other moieties, additives, components, integers or steps. Moreover the singular encompasses the plural unless the context otherwise requires: in particular, where the indefinite article is used, the specification is to be understood as contemplating plurality as well as singularity, unless the context requires otherwise.

Preferred or optional features of each aspect of the invention may be as described in connection with any of the other aspects. Other features of the invention will become apparent from the following examples. Generally speaking the invention extends to any novel one, or any novel combination, of the features disclosed in this specification (including any accompanying claims and drawings). Thus features, integers, characteristics, compounds, chemical moieties or groups described in conjunction with a particular aspect, embodiment or example of the invention are to be understood to be applicable to any other aspect, embodiment or example described herein unless incompatible therewith. Moreover unless stated otherwise, any feature disclosed herein may be replaced by an alternative feature serving the same or a similar purpose.

Where upper and lower limits are quoted for a property, for example for the concentration of a fuel component, then a range of values defined by a combination of any of the upper limits with any of the lower limits may also be implied.

In this specification, references to properties are - unless stated otherwise - to properties measured under ambient conditions, i.e. at atmospheric pressure and at a temperature of about 20°C.

Embodiments of the invention will now be further described in the following non-limiting examples with reference to the accompanying drawings in which:
Figure 1 is a ternary plot showing a shaded formulation space for a spark ignition fuel comprising C₅ iso-alkane component, C₆ iso-alkane component and ethanol; and
Figure 2 is a ternary plot showing a shaded formulation space for a compression ignition fuel comprising C₅ n-alkane component, C₆ iso-alkane component and ethanol.

### Examples 1 to 6

Fuel formulations for powering a spark ignition engine were determined in Examples 1 to 6.

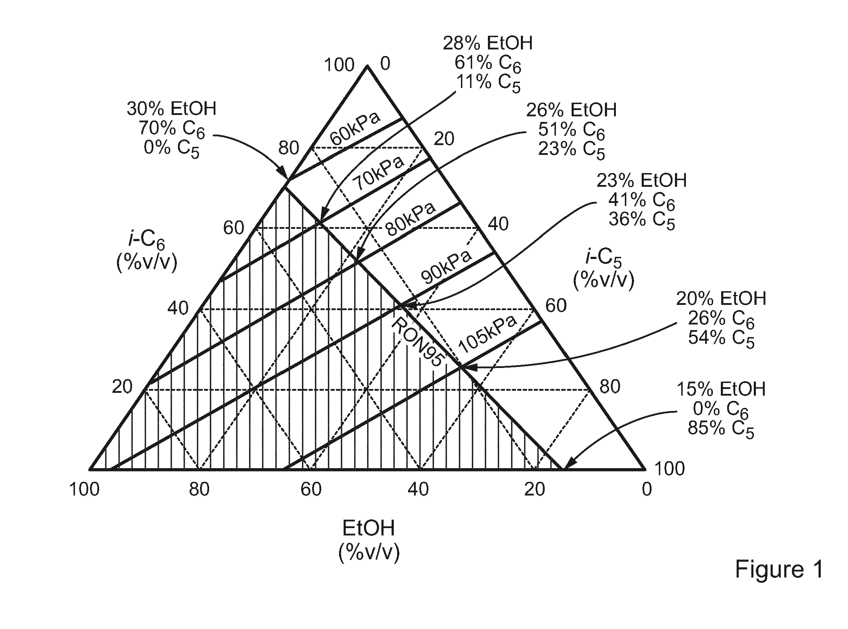

The blends are based on a calculated formulation space summarised by the ternary plot of Figure 1. Notably, the shaded area in Figure 1 represents compositions which achieve a RON of at least 95. Compositions with an RVP in the range of from 60 to 105 kPa are also readily determined.

The RON and RVP may be measured according to ASTM D-2699-04a (RON) and ASTM-D-323 (RVP).

Components may be blended to form fuel formulations as shown in Table 1:

**Table 1**

| **Component** | **Ex 1** | **Ex 2** | **Ex 3** | **Ex 4** | **Ex 5** | **Ex 6** |
|---|---|---|---|---|---|---|
| C₅ iso-alkane¹ (% v/v) | 85 | 54 | 36 | 23 | 11 | 0 |
| C₆ iso-alkane² (% v/v) | 0 | 26 | 41 | 51 | 61 | 70 |
| Ethanol (% v/v) | 15 | 20 | 23 | 26 | 28 | 30 |
| RON | 95 | 95 | 95 | 95 | 95 | 95 |
| RVP (kPa) | 127 | 105 | 90 | 80 | 70 | 60 |

| | | | | | | |
|---|---|---|---|---|---|---|
| ¹ comprises 80% v/v C₅ iso-alkanes (80% 2,2-dimethylpropane (RON86 MON 80)) and 20% C₅ n-alkane ² comprises 98% v/v C₆ iso-alkanes and 2% C₆ n-alkane (the C₆ iso-alkanes are 3-methylpentane (RON75 MON74) at 28%v/v, 2-methylpentane (RON73, MON74) at 50% v/v, 2,3-dimethylbutane (RON102, MON101) at 10% v/v, 2,2-dimethylbuatne (RON94, MON93) at 10% v/v). | | | | | | |

Each of these formulations has a RON and RVP suitable for use in a spark ignition engine.

Ethanol is used at a blend ratio of about 20-30% v/v, which results in a gravimetric energy density of about 38-40 MJ/kg.

The fuel is 100% bio-derived with 70-80% v/v of its composition being non-food based.

### Examples 7 to 13

Fuel formulations for powering a compression ignition engine were determined in Examples 7 to 13.

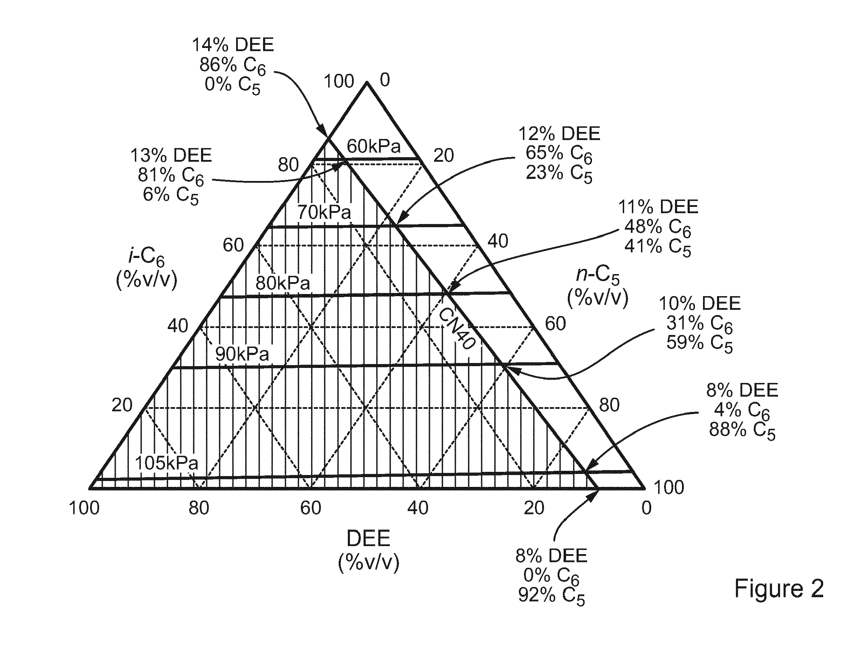

The blends are based on a calculated formulation space summarised by the ternary plot of Figure 2. Notably, the shaded area in Figure 1 represents compositions which achieve a cetane number (CN) of at least 40. Compositions with an RVP in the range of from 60 to 105 kPa are also readily determined.

The CN and RVP may be determined according to ASTM D613-14 (CN) and ASTM-D-323 (RVP).

Components may be blended to form fuel formulations as shown in Table 2:

**Table 2**

| **Component** | **Ex 7** | **Ex 8** | **Ex 9** | **Ex 10** | **Ex 11** | **Ex 12** | **Ex 13** |
|---|---|---|---|---|---|---|---|
| C₅ n-alkane¹ (% v/v) | 92 | 88 | 59 | 41 | 23 | 6 | 0 |
| C₆ iso-alkane² (% v/v) | 0 | 4 | 31 | 48 | 65 | 81 | 86 |
| Diethyl ether (% v/v) | 8 | 8 | 10 | 11 | 12 | 13 | 14 |
| CN | 40 | 40 | 40 | 40 | 40 | 40 | 40 |
| RVP (kPa) | 107 | 105 | 90 | 80 | 70 | 60 | 57 |

| | | | | | | | |
|---|---|---|---|---|---|---|---|
| ¹ comprises 100% v/v C₅ n-alkane ² comprises 98% v/v C₆ iso-alkanes and 2% C₆ n-alkane (the C₆ iso-alkanes are 3-methylpentane (RON75 MON74) at 28% v/v, 2-methylpentane (RON73, MON74) at 50% v/v, 2,3-dimethylbutane (RON102, MON101) at 10% v/v, 2,2-dimethylbuatne (RON94, MON93) at 10% v/v). | | | | | | | |

Each of these formulations has a CN suitable for use in a compression ignition engine.

The RVP is unusual for a compression ignition fuel. Safe handling of the fuel is achieved by its low volatility ensuring that vapour mixtures in the headspace of tanks are always below their lower flammability limit. The high volatility compression ignition fuel proposed here works by producing vapour mixtures during storage that are sufficiently rich to be above their upper flammability limit, in a similar manner to gasoline.

Diethyl ether only needs to be used at blend ratios between 8 and 14% v/v in CN 40 fuel for compression ignition engines. The gravimetric energy density is higher at 43-44 MJ/kg with 86-92% v/v of the fuel being derived from non-food based biomass.

## Claims

1. A fuel formulation for an internal combustion engine, the fuel formulation comprising, in combination with a cetane or octane enhancing component: a bio-derived C₆ iso-alkane component (i); and/or a bio-derived C₅ alkane component (ii).

2. The fuel formulation of claim 1, wherein components (i) and (ii) together make up at least 50% v/v of the total formulation.

3. The fuel formulation of claim 1 or claim 2, comprising component (i) and component (ii).

4. The fuel formulation of any preceding claim having a research octane number (RON) of 90 or greater.

5. The fuel formulation of claim 4, wherein the cetane or octane enhancing component is an octane enhancing oxygenate, in particular ethanol.

6. The fuel formulation of claim 4 or claim 5, wherein the bio-derived C₅ alkane component (ii) comprises at least 80% v/v C₅ iso-alkanes.

7. The fuel formulation of any one of claims 4 to 6 comprising in the range of from 15 to 30% v/v ethanol, based on the total volume of the formulation; and both component (i) and component (ii) such that the formulation has a research octane number of at least 94 and a Reid vapour pressure in the range of from 60 to 105 kPa.

8. The fuel formulation of any one of claims 1 to 3 having a cetane number (CN) of 37 or greater.

9. The fuel formulation of claim 8, wherein the cetane or octane enhancing component is a cetane enhancing oxygenate, in particular diethyl ether.

10. The fuel formulation of claim 8 or claim 9, wherein the bio-derived C₅ alkane component (ii) comprises at least 95% v/v C₅ n-alkane.

11. The fuel formulation of any one of claims 8 to 10 comprising in the range of from 8 to 15% v/v diethyl ether, based on the total volume of the formulation; and both component (i) and component (ii) such that the formulation has a cetane number of at least 39 and a Reid vapour pressure in the range of from 60 to 105 kPa.

12. An automotive fuel composition comprising a fuel formulation according to any preceding claim and one or more other fuel ingredients.

13. Use a fuel formulation or composition according to any preceding claim to power an internal combustion engine.

14. Use according to claim 13, for the purpose of reducing CO₂ emissions relative to powering the engine with a pure fossil fuel, or a fuel with a lower bio-derived content.

15. Use according to claim 13 or claim 14 wherein the internal combustion engine is the engine of a hybrid vehicle comprising an electric motor.
